Europäisches Patentamt

European Patent Office

Office européen des brevets

(11) Veröffentlichungsnummer: **0 040 300**
**B1**

(12) **EUROPÄISCHE PATENTSCHRIFT**

(45) Veröffentlichungstag der Patentschrift:
07.03.84

(21) Anmeldenummer: 81101770.6

(22) Anmeldetag: 10.03.81

(51) Int. Cl.³: **F 16 B 13/04**

(54) **Befestigungselement.**

(30) Priorität: 16.05.80 DE 3018875

(43) Veröffentlichungstag der Anmeldung:
25.11.81 Patentblatt 81/47

(45) Bekanntmachung des Hinweises auf die Patenterteilung:
07.03.84 Patentblatt 84/10

(84) Benannte Vertragsstaaten:
AT CH FR GB IT LI NL SE

(56) Entgegenhaltungen:
GB - A - 2 024 976

(73) Patentinhaber: **HILTI Aktiengesellschaft,
FL-9494 Schaan (LI)**

(72) Erfinder: **Herb, Armin, Lärchenstrasse 9,
D-8123 Peissenberg (DE)**

(74) Vertreter: **Berg, Wilhelm, Dr. et al, Dr. Berg, Dipl.-Ing.
Stapf, Dipl.-Ing. Schwabe, Dr. Dr. Sandmair
Patentanwälte Postfach 860245,
D-8000 München 86 (DE)**

ACTORUM AG

## Befestigungselement

Die Erfindung betrifft ein Befestigungselement mit Ankerbolzen und Spreizkeil, wobei der Ankerbolzen im rückwärtigen Bereich mit einem als Flansch ausgebildeten Angriffsteil zur Lastaufnahme versehen ist und eine sich gegen den vorderen Bereich des Ankerbolzens der Umfangskontur nähernde Keilfläche aufweist, entlang welcher der Spreizkeil zur Verspreizung des Elementes verschiebbar ist, und sich Ankerbolzen und Spreizkeil in ungespreiztem Zustand zu einem kreisrunden Querschnitt ergänzen (siehe GB-A Nr. 2024976).

Befestigungselemente der obengenannten Art werden hauptsächlich für Reihenbefestigungen, wie beispielsweise abgehängte Decken oder dergleichen, verwendet. Dabei kommt es vor, dass das Bohrloch etwas zu gross gebohrt wird, oder dass sich im Bereich der Bohrung Risse ergeben. In diesem Fall sind mit den bekannten Befestigungselementen keine genügenden Verankerungswerte erreichbar. Es kommt dann zu einer erheblichen Anzahl von Ausfällen. Dadurch wird die Verankerung von ganzen Bauteilen gefährdet.

Der Erfindung liegt daher die Aufgabe zugrunde, ein Befestigungselement zu schaffen, das innerhalb eines grösseren Durchmesserbereiches setzbar ist.

Gemäss der Erfindung wird dies dadurch erreicht, dass die Keilfläche in Bereiche von unterschiedlichem Neigungswinkel unterteilt ist.

Durch die unterschiedlichen Neigungswinkel ist das Spreizverhalten des Befestigungselementes an die Erfordernisse anpassbar. So ist es möglich, den Spreizvorgang in mehreren Phasen durchzuführen. Die Spreizwege können durch Schaffung eines Anschlages, wie beispielsweise einer Nase oder dergleichen, abgegrenzt werden. In der Fachsprache wird dies als wegbegrenzte Spreizung bezeichnet.

Zur Schaffung eines Anschlages ist es vorteilhaft, wenn bei der Verspreizung der Spreizkeil zuerst an den Keilflächenbereichen mit kleinerem Neigungswinkel zur Anlage kommt. Beim Setzvorgang des Dübels ergibt das Auflaufen des Spreizkeils auf die Bereiche mit grösserem Neigungswinkel einen Anschlag mit deutlich spürbarem Anstieg des Widerstandes zum Eintreiben des Spreizkeils.

Der grössere Neigungswinkel kann sich bis gegen 90° erstrecken, womit ein fester Anschlag geschaffen wird.

Unter extremer Belastung treten im Aufnahmematerial gelegentlich Risse auf. Wenn sich diese im Bereich eines Bohrloches erstrecken, ergibt sich eine drastische Änderung des Bohrlochdurchmessers. In diesem Fall kommt die zweite Spreizphase zum Zuge. Der grössere Neigungswinkel ergibt bei geringem axialem Spreizweg eine starke radiale Aufweitung. Auf diese Weise wird verhindert, dass das Befestigungselement aus dem Bohrloch herausgerissen wird.

Für die Anordnung der Keilflächenbereiche bestehen verschiedene Möglichkeiten. Als besonders zweckmässig hat es sich erwiesen, dass die Keilflächenbereiche in axialer Richtung hintereinander angeordnet sind. Durch das Hintereinanderanordnen der Keilflächenbereiche wird ein grosser Nachspreizbereich geschaffen. Das Hintereinanderanordnen der Keilflächenbereiche ist auch aus fabrikationstechnischen Gründen besonders einfach.

Für eine kompakte Bauweise des Dübels ist es vorteilhaft, dass die Keilflächenbereiche teilweise nebeneinander angeordnet sind. Für eine solche Anordnung sind vor allem grössere Befestigungselemente vorteilhaft. Auch bei der Anordnung nebeneinander lässt sich der Zeitpunkt des in Berührungkommens der Keilflächen recht genau erfassen. Aus herstellungstechnischer Sicht ergeben sich jedoch durch diese Anordnung gewisse Probleme.

Im Prinzip ist es möglich, eine Vielzahl von Keilflächenbereichen vorzusehen. In der Praxis hat es sich jedoch als zweckmässig erwiesen, dass zwei Keilflächenbereiche von unterschiedlichem Neigungswinkel vorgesehen sind. Die beiden Neigungswinkel der Keilflächenbereiche können dadurch optimal aufeinander abgestimmt werden. Zwei Keilflächenbereiche sind auch aus herstellungstechnischer Sicht besonders günstig.

Die Erfindung soll nachstehend anhand der sie beispielsweise wiedergebenden Zeichnungen näher erläutert werden. Es zeigen:

Fig. 1 ein erfindungsgemässes zweiteiliges Befestigungselement in ungespreiztem Zustand im Teilschnitt;

Fig. 2 das Befestigungselement gemäss Fig. 1 in gespreiztem Zustand;

Fig. 3 das Befestigungselement gemäss Fig. 1 in zweiter Spreizphase;

Fig. 4 ein weiteres erfindungsgemässes zweiteiliges Befestigungselement in Perspektive;

Fig. 5 ein drittes zweiteiliges erfindungsgemässes Befestigungselement in Perspektive.

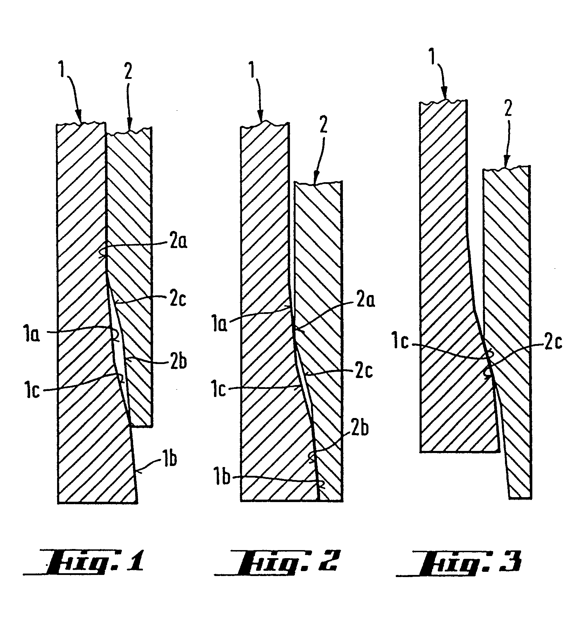

Das aus Fig. 1 ersichtliche Befestigungselement besteht im wesentlichen aus einem insgesamt mit 1 bezeichneten Ankerbolzen und einem insgesamt mit 2 bezeichneten Spreizkeil. Der Ankerbolzen weist drei Keilflächenbereiche 1a, 1b und 1c auf, welche unterschiedliche Neigungswinkel zur Längsachse des Befestigungselements besitzen. Der Neigungswinkel des Keilflächenbereichs 1a ist gleich gross wie derjenige des Keilflächenbereichs 1b. Der dazwischenliegende Keilflächenbereich 1c weist einen grösseren Neigungswinkel als die Keilflächenbereiche 1a und 1b auf. Der Spreizkeil 2 ist mit einer achsparallelen Gleitfläche 2a sowie mit zwei Keilflächenbereichen 2b und 2c versehen. Der Neigungswinkel des Keilflächenbereichs 2b entspricht demjenigen der Keilflächenbereiche 1a und 1b des Ankerbolzens 1. Der dazwischenliegende Keilflächenbereich 2c weist denselben Neigungswinkel wie der Keilflächenbereich 1c des Ankerbolzens 1 auf. Beim Spreizvorgang kommen der Vorderbereich der Gleitfläche 2a sowie der Keilflächenbereich 2b in Eingriff mit den Keilflächenbereichen 1a, 1b des Ankerbolzens 1.

Fig. 2 zeigt den gespreizten Zustand des Befestigungselementes. Dabei ist der Spreizkeil 2 so tief eingetrieben, bis sein vorderes Ende bündig ist mit demjenigen des Ankerbolzens 1. Dabei gleiten die Keilflächenbereiche 1a, 1b und 2b sowie der Vorderbereich der Gleitfläche 2a noch immer aufeinander. Die Keilflächenbereiche 1c und 2c sind bisher jedoch noch nicht miteinander in Eingriff gelangt.

Bei der Belastung des Ankerbolzens 1 gemäss Fig. 3 verschiebt sich dieser gegenüber dem Spreizkeil 2. Dabei kommen die Keilflächenbereiche 1c und 2c mit dem grösseren Neigungswinkel zur Längsachse des Ankerbolzens 1 miteinander in Eingriff. Durch den grösseren Keilwinkel wird bei einer bestimmten axialen Verschiebung des Ankerbolzens 1 gegenüber dem Spreizkeil 2 eine grössere radiale Aufweitung des Befestigungselementes bewirkt. Dabei gleiten die beiden Keilflächenbereiche 1c und 2c aufeinander.

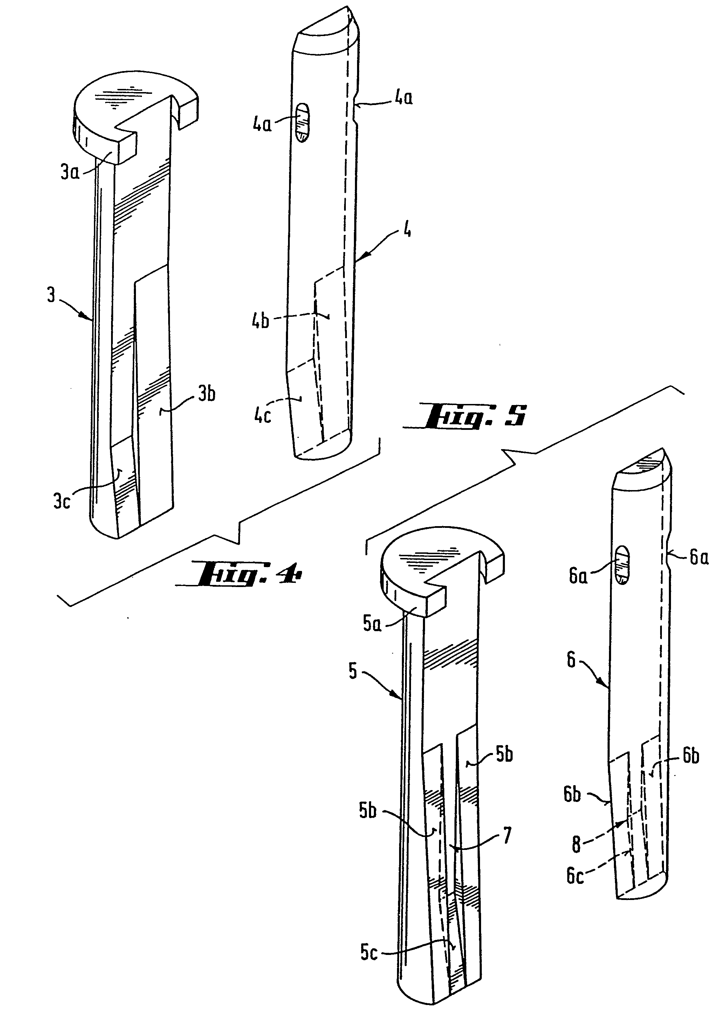

Fig. 4 zeigt ein weiteres erfindungsgemässes Befestigungselement. Dieses besteht aus einem insgesamt mit 3 bezeichneten Ankerbolzen und einem insgesamt mit 4 bezeichneten Spreizkeil. Der Ankerbolzen 3 weist an seinem rückwärtigen Ende einen Flansch mit Fortsätzen 3a auf. Der Flansch bzw. die Fortsätze 3a dienen als Anschlag beim Einsetzen des Befestigungselementes in ein Bohrloch. Auf dem Schaft des Ankerbolzens 3 sind zwei Keilflächenbereiche 3b und 3c angeordnet. Die Keilflächenbereiche 3b, 3c sind nebeneinander angeordnet. Der Neigungswinkel des Keilflächenbereichs 3b ist kleiner als derjenige des Keilflächenbereichs 3c. Der Spreizkeil 4 weist in seinem rückwärtigen Bereich mit den etwas einwärts gerichteten Flanschfortsätzen 3a des Ankerbolzens 3 lösbar zusammenwirkende Ausnehmungen 4a auf. Im vorderen Bereich weist der Spreizkeil 4 ebenfalls Keilflächenbereiche 4b, 4c von unterschiedlichem Neigungswinkel auf. Die Keilflächenbereiche 4b, 4c sind in Längsrichtung versetzt so angeordnet, dass zunächst der Keilflächenbereich 4b mit dem kleineren Neigungswinkel zur Anlage mit dem Keilflächenbereich 3b des Ankerbolzens 3 kommt.

Fig. 5 zeigt ein weiteres, aus einem insgesamt mit 5 bezeichneten Ankerbolzen und einem insgesamt mit 6 bezeichneten Spreizkeil bestehendes Befestigungselement. Der Ankerbolzen 5 ist an seinem rückwärtigen Ende ebenfalls mit einem Flansch sowie mit etwas nach einwärts gerichteten Flanschfortsätzen 5a versehen. Der Spreizkeil 6 weist auch hier zum lösbaren Verbinden mit dem Ankerbolzen 5 in seinem rückwärtigen Bereich Ausnehmungen 6a auf. Der Ankerbolzen 5 weist in seinem vorderen Bereich zwei Keilflächenbereiche 5b auf. Zwischen den Keilflächenbereichen 5b besteht ein Schlitz 7, dessen Grund im vorderen Bereich ebenfalls als Keilflächenbereich 5c ausgebildet ist. Der Spreizkeil 6 weist entsprechend zwei Keilflächenbereiche 6b sowie eine Nase 8 mit einem Keilflächenbereich 6c auf, wobei der Neigungswinkel der Keilflächenbereiche 6b kleiner ist als derjenige des Keilflächenbereichs 6c. Auch hier sind die Keilflächenbereiche so axial versetzt angeordnet, dass zunächst die Keilflächenbereiche 5b, 6b mit dem kleineren Neigungswinkel und erst später die Keilflächenbereiche 5c, 6c miteinander zum Eingriff gelangen.

## Patentansprüche

1. Befestigungselement mit Ankerbolzen (1, 3, 5) und Spreizkeil (2, 4, 6), wobei der Ankerbolzen im rückwärtigen Bereich mit einem als Flansch ausgebildeten Angriffsteil zur Lastaufnahme versehen ist und eine sich gegen den vorderen Bereich des Ankerbolzens der Umfangskontur nähernde Keilfläche aufweist, entlang welcher der Spreizkeil mit einer Keilfläche zur Verspreizung des Elementes verschiebbar ist und sich Ankerbolzen und Spreizkeil in ungespreiztem Zustand zu einem kreisrunden Querschnitt ergänzen, dadurch gekennzeichnet, dass die Keilflächen von Ankerbolzen und Spreizkeil in Keilflächenbereiche von unterschiedlichem Neigungswinkel zur Längsachse des Befestigungselements unterteilt sind.

2. Befestigungselement nach Anspruch 1, dadurch gekennzeichnet, dass bei der Verspreizung der Spreizkeil zuerst an den Keilflächenbereichen (1a, 1b, 3b, 5b) mit kleinerem Neigungswinkel des Ankerbolzens zur Anlage kommt.

3. Befestigungselement nach einem der beiden Ansprüche 1 oder 2, dadurch gekennzeichnet, dass die Keilflächenbereiche (1a, 1c, 1b; 2c, 2b) in axialer Richtung hintereinander angeordnet sind.

4. Befestigungselement nach einem der beiden Ansprüche 1 oder 2, dadurch gekennzeichnet, dass die Keilflächenbereiche (3b, 3c; 4b, 4c; 5b, 5c; 6b, 6c) teilweise nebeneinander angeordnet sind.

5. Befestigungselement nach einem der Ansprüche 2 bis 4, dadurch gekennzeichnet, dass an Ankerbolzen und Spreizkeil je zwei Keilflächenbereiche von unterschiedlichem Neigungswinkel vorgesehen sind.

## Claims

1. A fixing element having an anchor pin (1, 3, 5) and an expanding wedge (2, 4, 6), the anchor pin being provided in its rear portion with a load-bearing member in the form of a flange and having a wedge surface which, towards the front portion of the anchor pin, approaches the circumferntial contour, the expanding wedge being slidable by a wedge surface along the first said wedge surface for the purpose of expanding the element, the anchor pin and the expanding wedge complementing one another in the unexpanded state to form a circular cross-section, characterised in that the wedge surfaces of the anchor pin and the expanding wedge are divided up into wedge surface zones having different angles of inclination to the longitudinal axis of the fixing element.

2. A fixing element according to claim 1, characterised in that in the expanding operation the expanding wedge first comes into contact with the wedge surface zones (1a, 1b, 3b, 5b) having a smaller angle of inclination of the anchor pin.

3. A fixing element according to claim 1 or 2, characterised in that the wedge surface zones (1a, 1c, 1b; 2c, 2b) are disposed consecutively in the axial direction.

4. A fixing element according to claim 1 or 2, characterised in that the wedge surface zones (3b, 3c; 4b, 4c; 5b, 5c; 6b, 6c) are disposed partially side by side.

5. A fixing element according to any one of claims 2 to 4, characterised in that two wedge surface zones of different angles of inclination are provided on the anchor pin and expanding wedge.

## Revendications

1. Elément de fixation à boulon d'ancrage et à clavette cunéiforme d'expansion, du type dans lequel le boulon d'ancrage est pourvu, dans sa partie arrière, d'un élément d'attaque de la charge, réalisé sous la forme d'une collerette, ainsi que d'une surface cunéiforme s'appliquant contre la partie antérieure et s'approchant du contour périphérique, le long de cette surface cunéiforme glisse la clavette cunéiforme alors que le boulon d'ancrage et la clavette cunéiforme se complètent, à l'état non expansé, suivant une section transversale circulaire, caractérisé par le fait que la surface cunéiforme est subdivisée en des plages ayant des angles d'inclinaison différents par rapport à l'axe longitudinal du boulon d'ancrage (1, 3, 5).

2. Elément de fixation selon la revendication 1, caractérisé par le fait que, lors de l'expansion, la clavette cunéiforme d'expansion (2, 4, 6) vient d'abord en contact avec les plages des surfaces cunéiformes de plus petit angle d'inclinaison.

3. Elément de fixation selon l'une des revendications 1 ou 2, caractérisé par le fait que les plages des surfaces cunéiformes ou les plages des surfaces de glissement (1a, 1c, 1b; 2a, 2c, 2b) sont disposées les unes derrière les autres dans la direction axiale.

4. Elément de fixation selon l'une des revendications 1 ou 2, caractérisé par le fait que les plages des surfaces cunéiformes (3b, 3c; 4b, 4c; 5b, 5c; 6b, 6c) sont en partie disposées les unes à côté des autres.

5. Elément de fixation selon l'une des revendications 2 à 4, caractérisé par le fait que sont prévues deux plages de surfaces cunéiformes ayant des angles d'inclinaison différents.

**_Fig. 1_**     **_Fig. 2_**     **_Fig. 3_**

0 040 300

3a

3

3b

3c

*Fig. 4*

4a

4a

4

4b

4c

*Fig. 5*

5a

5

5b

5b

5c

7

6a

6a

6

6b

6b

8

6c

7